# EUROPÄISCHE PATENTSCHRIFT

(11) **EP 3 525 905 B1**
(45) Veröffentlichungstag und Bekanntmachung des Hinweises auf die Patenterteilung: **02.09.2020**
(21) Anmeldenummer: 17783719.2
(22) Anmeldetag: 09.10.2017
(51) Int. Cl.: B01D 29/23, B01D 29/68, B01D 29/54

(54) **FILTERVORRICHTUNG**
FILTER DEVICE
DISPOSITIF DE FILTRATION

(30) Priorität: 12.10.2016 DE 102016012206; 01.03.2017 DE 102017001970; 01.03.2017 DE 102017001968
(43) Veröffentlichungstag der Anmeldung: 21.08.2019
(73) Patentinhaber: Hydac Process Technology GmbH, 66538 Neunkirchen (DE)
(72) Erfinder: SCHLICHTER, Bernhard, 66123 Saarbrücken (DE); GERSTNER, Jörg Hermann, 66346 Püttlingen (DE); DEUTSCHMEYER, Manfred, 66706 Perl (DE)
(74) Vertreter: Bartels und Partner, Patentanwälte
(86) Internationale Anmeldenummer: PCT/EP2017/001191
(87) Internationale Veröffentlichungsnummer: WO 2018/068887

(56) Entgegenhaltungen:
- WO-A2-00/78426
- DE-A1- 3 611 075
- DE-U1- 9 103 149
- US-A- 3 357 566

## Beschreibung

Die Erfindung betrifft eine Filtervorrichtung mit den Merkmalen im Oberbegriff von Anspruch 1.

Für die Betriebssicherheit und Lebensdauer von Verbrennungsmotoren ist die einwandfreie Beschaffenheit des Schmieröls von großer Bedeutung. Insbesondere stellt der Dauerbetrieb von Dieselmotoren, die beispielsweise bei maritimen Anwendungen mit Schweröl betrieben sind, besonders hohe Anforderungen an die Beschaffenheit des Schmieröls, so dass bei solchen Anwendungen der Einsatz von Filtervorrichtungen zur Schmierölreinigung unerlässlich ist. Diesbezüglich ist es Stand der Technik, Filtervorrichtungen zu benutzen, bei denen Filtereinsätze rückspülbar sind, um längere Laufzeiten zwischen dem Wechsel von Filtereinsätzen zu ermöglichen und dadurch Wartungskosten gering zu halten. Als Beispiel für den diesbezüglichen Stand der Technik zeigt das Dokument DE 34 43 752 A1 eine Filtervorrichtung der oben genannten Gattung.

Die Effizienz der Abreinigung hängt bei Vorrichtungen dieser Art in hohem Maße vom Verlauf des Rückspülvolumenstroms ab, der sich bei der an der spaltförmigen Durchtrittsöffnung zur Verfügung stehenden Druckdifferenz durch den Strömungsraum zur fluidführenden, d.h. hohlen, Antriebswelle erstreckt. Die beim Rückspülvorgang am Spalt der Durchtrittsöffnung wirksame Druckdifferenz, die bei den Umgebungsdruck führender Antriebswelle und vom Systemdruck erzeugtem Rückspüldruck beispielsweise 1,5 bar beträgt, soll eine möglichst hohe Eintrittsgeschwindigkeit am Spalt und einen möglichst hohen Rückspülvolumenstrom ermöglichen. Um diesem Ziel näher zu kommen sieht die genannte, bekannte Filtervorrichtung eine Verkleinerung des beim Rückspülvorgang jeweils wirksamen Spülquerschnitts in der Weise vor, dass der Rückspülvorgang auf nur eines von zwei Rückspülorganen aufgeteilt wird. Hierfür weist die bekannte Filtervorrichtung eine Steuereinrichtung auf, die den abwechselnden Betrieb der Rückspülorgane durch die Aufteilung des Schlammablasses auf zwei Spülanschlüsse steuert, die jeder mit jeweils einem Rückspülorgan fluidführend verbunden sind. Eine derartige Aufteilung des Schlammablasses, wobei an jedem Spülanschluss eine Ventileinrichtung vorgesehen sein muss, macht die Vorteile der günstigen Abreinigungswirkung zumindest teilweise zunichte. Außerdem besteht bei dieser Gestaltung die Gefahr der Verstopfung des Schlammablasses durch Ablagerungen, insbesondere in den Ventileinrichtungen an den Spülanschlüssen.

Die DE 91 03 149 U1 und die DE 36 11 075 A1 offenbaren jeweils eine Filtervorrichtung mit den Merkmalen im Oberbegriff von Anspruch 1 mit einem Filtergehäuse mit einem Fluideinlass für Unfiltrat und mit einem Fluidauslass für Filtrat und mit mindestens einem im Filtergehäuse aufgenommenen ein- oder mehrteiligen Filtereinsatz, der mit mindestens einem Rückspülorgan im Gegenstrom zur Filtrierrichtung abreinigbar ist, das mittels einer fluidführenden Antriebswelle eines Drehantriebes an der Innenseite des Filtermaterials des jeweiligen Filtereinsatzes verfahrbar ist und an seinem dieser Innenseite des Filtermaterials benachbarten Ende eine spaltförmige Durchtrittsöffnung aufweist, die parallel zur Drehachse der Antriebswelle verläuft und die in einen mit der Antriebswelle fluidführend verbundenen Strömungsraum einmündet, der sich in einer ersten Ebene, in der die Durchtrittsöffnung liegt, in Richtung der Antriebswelle zumindest teilweise kontinuierlich verjüngt, wobei in einer weiteren zweiten Ebene quer zu der ersten Ebene sich der Strömungsraum ausgehend von der Durchtrittsöffnung in Richtung der Antriebswelle zumindest teilweise kontinuierlich erweitert.

Ausgehend von diesem Stand der Technik stellt sich die Erfindung die Aufgabe, eine Filtervorrichtung der eingangs genannten Gattung zur Verfügung zu stellen, die sich bei einfacher Bauweise durch eine besonders effektive Abreinigungswirkung auszeichnet.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass innerhalb des Strömungsraumes tragflächenartige Strömungsleitkörper eingebracht sind, die sich von der spaltförmigen Durchtrittsöffnung weg zumindest teilweise in Richtung eines Kanalaustritts erstrecken.

Es ist ferner vorgesehen, dass in einer weiteren zweiten Ebene, die quer zu der ersten Ebene verläuft, in der die Durchtrittsöffnung liegt, sich der Strömungsraum ausgehend von der Durchtrittsöffnung in Richtung der Antriebswelle zumindest teilweise kontinuierlich erweitert. Durch diese Erweiterung bildet der Strömungsraum eine Art Diffusor. Dies führt zu einer Verringerung des Druckverlustes und damit zur Maximierung des Rückspülvolumenstroms sowie der Eintrittsgeschwindigkeit am Spalt der Durchtrittsöffnung. Bei der unmittelbaren Nähe des Spalts am Filtermaterial ergibt sich dadurch eine besonders effektive Abreinigung. Der Wegfall von Ventileinrichtungen, wie sie die genannte, bekannte Lösung vorsieht, gewährleistet zudem ein besonders sicheres Betriebsverhalten bei einfacher Bauweise der Vorrichtung.

Mit Vorteil kann sich dabei der Strömungsraum in der ersten Ebene in der Art eines Einströmtrichters kontinuierlich verjüngen.

Bei besonders vorteilhaften Ausführungsbeispielen kann die Anordnung derart getroffen sein, dass, ausgehend von der spaltförmigen Durchlassöffnung, in der ersten Ebene mindestens
- eine Begrenzungswand des Einströmtrichters schräg verlaufend und eine weitere Begrenzungswand eben verlaufend;
- zwei Begrenzungswände schräg und geradlinig verlaufend;
- zwei Begrenzungswände mit parabelförmigem Verlauf; und
- eine Begrenzungswand schräg und geradlinig und die weitere Begrenzungswand kurvenförmig verlaufend
ausgebildet sind.

Bei Ausführungsbeispielen, bei denen in Richtung der Fluidanbindung des Strömungsraums an eine interne Fluidführung der Antriebswelle der jeweilige Strömungsraum mit seinen Begrenzungswänden in einen rohr- oder kanalförmigen Abschnitt übergeht, in dem die Begrenzungswände einen geradlinigen Verlauf haben, ergibt sich ein besonders homogenes Geschwindigkeitsprofil des Rückspülvolumenstroms.

Bezüglich der Erweiterung des Strömungsraums in der quer zur Ebene des Spalts der Durchtrittsöffnung verlaufenden Richtung kann die Anordnung mit Vorteil so getroffen sein, dass in dieser zweiten Ebene der Strömungsraum sich von der spaltförmigen Durchtrittsöffnung in Richtung der internen Fluidführung der Antriebswelle konisch mit geradlinig verlaufenden Begrenzungswänden erweitert.

Bei vorteilhaften Ausführungsbeispielen weist der Strömungsraum an seinem Austritt aus dem Rückspülorgan in Richtung des jeweiligen Filtereinsatzes zumindest eine Verrundung an den Begrenzungswänden der spaltförmigen Durchtrittsöffnung auf, die parallel zur Drehachse der Antriebswelle verläuft. Die Verrundung bildet eine Art Steuerfläche entlang der angelagerte Partikel, die bei der Drehbewegung am Rückspülorgan anlaufen, entlang der Verrundung zum Eingangsbereich des Spülspalts geführt werden, wo aufgrund der hohen Eintrittsgeschwindigkeit die maximale Ablösekraft wirksam ist.

Bei einem Flächenverhältnis von Spalteintritt zu Kanalaustritt, das im Bereich von 0,2 bis 2,0, vorzugsweise zwischen 0,3 bis 1,0, liegt, ergibt sich ein den Schlammabstrom begünstigendes, homogenes Geschwindigkeitsprofil des Rückspülvolumenstroms.

Vorzugsweise liegt die Ausdehnung der spaltförmigen Durchlassöffnung von der Höhe zu ihrer Breite im Bereich von 10 bis 100, vorzugsweise im Bereich von 30 bis 70.

Mit besonderem Vorteil liegt das Verhältnis der Breite der spaltförmigen Durchlassöffnung zu dem freien Durchmesser des rohr- oder kanalförmigen Abschnitts, der die Übergangsstelle zu der internen Fluidführung der Antriebswelle bildet, zwischen 0,05 bis 0,5.

Vorzugsweise haben mindestens Teile der Strömungsleitkörper einen gebogenen oder geradlinigen Verlauf und erstrecken sich durchgehend zwischen den Begrenzungswänden des Rückspülorgans, die parallel zu der Drehachse der Antriebswelle verlaufen.

Ein besonders günstiger Strömungsverlauf ist erreichbar, wenn mindestens ein Strömungsleitkörper ausgehend von der spaltförmigen Durchlassöffnung weiter in den Strömungsraum hineinragt als mindestens ein weiterer Strömungsleitkörper, wobei der weiter hineinragende Strömungsleitkörper vorzugsweise in der Mitte der Spaltöffnung der Durchlassöffnung liegend sich von dieser in Richtung des Inneren des Strömungsraums weg erstreckt. Mit Vorteil erfolgt hierbei die Fluidführung innerhalb des Strömungsraums vom Spalteintritt bis vor den Kanalaustritt ohne Umlenkung des Gesamtstroms der Rückspülmenge.

Vorzugsweise ist das jeweilige Rückspülorgan mit seiner einen freien Stirnseite, die der Innenwand des zuordenbaren Filtereinsatzes zugewandt ist, abstandsfrei an dieser Innenwand mittels der drehbaren Antriebswelle vorbeigeführt.

Bei besonders vorteilhaften Ausführungsbeispielen sind eingesetzte Rückspülorgane in einem zugeordneten Aufnahmegehäuse austauschbar eingesetzt, das an der Antriebswelle angeordnet ist. Bei gleicher Bauweise von Antriebswelle und zugehörigem Drehantrieb lässt sich dadurch die Vorrichtung an jeweilige Einsatzbedingungen anpassen, indem in Aufnahmegehäusen an der Antriebswelle, deren Anzahl der Anzahl der Filtereinsätze entspricht, eine gewünschte Anzahl von Rückspülorganen eingesetzt sind, deren Anzahl und Strömungsraumgeometrie wiederum frei wählbar ist.

Dergestalt kann die Anordnung so getroffen sein, dass entlang der Antriebswelle mehrere Rückspülorgane in Übereinanderanordnung eingesetzt sind, wobei diese
- in mindestens zwei Gruppen zusammengefasst an verschiedenen Umfangspositionen an der Antriebswelle, vorzugsweise zu deren Drehachse diametral einander gegenüberliegend,
- in einer Gruppe ausschließlich auf einer Seite der Antriebswelle liegend, oder
- in alternierender Reihenfolge auf gegenüberliegenden Seiten der Antriebswelle angeordnet sind.

Nachstehend ist die Erfindung anhand von in der Zeichnung dargestellten Ausführungsbeispielen im Einzelnen erläutert. Es zeigen:
- Fig. 1: einen schematisch vereinfachten Längsschnitt eines Ausführungsbeispiels der erfindungsgemäßen Filtervorrichtung;
- Fig. 2: einen Vertikalschnitt des Strömungsraums eines einzelnen Rückspülorgans des Ausführungsbeispiels von Fig. 1;
- Fig. 3: einen Horizontalschnitt des Strömungsraums des Rückspülorgans von Fig. 2;
- Fig. 4: in stark vergrößerter Darstellung den in Fig. 3 mit IV bezeichneten Bereich;
- Fig. 5: einen schematisch vereinfachten Vertikalschnitt eines zweiten Ausführungsbeispiels der erfindungsgemäßen Filtervorrichtung;
- Fig. 6: einen Vertikalschnitt des Strömungsraums eines einzelnen Rückspülorgans des Ausführungsbeispiels von Fig. 5;
- Fig. 7: einen Horizontalschnitt des Strömungsraums von Fig. 6;
- Fig. 8: eine gegenüber einer praktischen Ausführungsform verkleinert gezeichnete perspektivische Schrägansicht eines einzelnen Rückspülorgans des Ausführungsbeispiels von Fig. 5;
- Fig. 9: einen etwa in natürlicher Größe gezeichneten Vertikalschnitt des Rückspülorgans von Fig. 8;
- Fig. 10 und 11: eine Stirnansicht bzw. Rückansicht des Rückspülorgans von Fig. 8 und 9;
- Fig. 12: einen Horizontalschnitt dieses Rückspülorgans;
- Fig. 13 und 14: einen Vertikalschnitt bzw. Horizontalschnitt des Strömungsraums eines einzelnen Rückspülorgans gemäß einem dritten Ausführungsbeispiel;
- Fig. 15: einen schematisch vereinfachten Vertikalschnitt eines vierten Ausführungsbeispiels der erfindungsgemäßen Filtervorrichtung;
- Fig. 16: einen Vertikalschnitt der für einen Filtereinsatz des Ausführungsbeispiels von Fig. 15 eingesetzten Rückspülorgans;
- Fig. 17: als Abwandlung zum Ausführungsbeispiel von Fig. 15 und 16 im Vertikalschnitt die durch Einsatzkörper gebildeten Rückspülorgane, eingesetzt in ein Aufnahmegehäuse;
- Fig. 18: eine perspektivische Schrägansicht eines Aufnahmekörpers für vier durch je einen Einsatzkörper gebildete Rückspülorgane, wobei ein Einsatzkörper vor dem Einsetzen dargestellt ist;
- Fig. 19a bis 19c: grafische Darstellungen von Beispielen für mögliche Höhenverteilungen eingesetzter Rückspülorgane; und
- Fig. 20a bis 20c: skizzenhafte Darstellungen dreier möglicher Verteilungen von Rückspülorganen über den Kreisumfang betreffender Filtereinsätze.

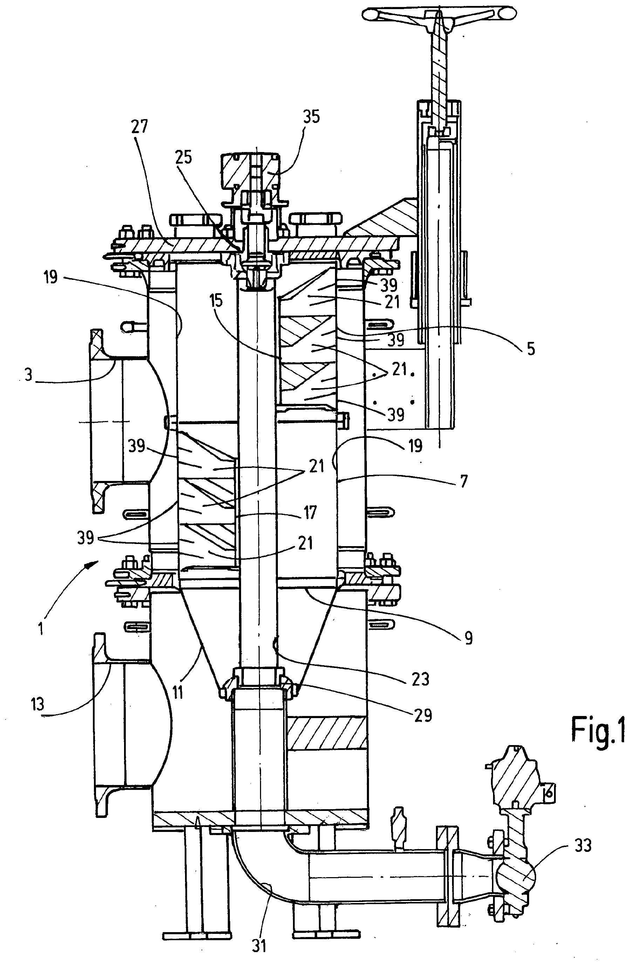

In Fig. 1, in der ein Ausführungsbeispiel der erfindungsgemäßen Filtervorrichtung dargestellt ist, ist ein Filtergehäuse als Ganzes mit 1 bezeichnet. Am kreiszylinderförmigen Filtergehäuse 1 ist seitlich ein Fluidauslass 3 für Filtrat angeordnet. Im Filtergehäuse 1 sind übereinander angeordnet ein oberer Filtereinsatz 5 und ein unterer Filtereinsatz 7 aufgenommen, die beim Filtriervorgang von innen nach außen durchströmbar sind, wobei das Unfiltrat beiden Filtereinsätzen 5 und 7 von einer unteren Eingangsseite 9 her zuführbar ist. Der Eingangsseite 9 ist ein Eingangsfilter 11 als Vorfilter vorgeschaltet, über den das Unfiltrat von einem Unfiltrateingang 13 her zuführbar ist. Bei maritimem Einsatz ist der Eingangsfilter 11 als sog. Fischsieb vorgesehen.

Für eine Abreinigung von Ablagerungen am Filtermaterial 19 von oberem Filtereinsatz 5 und vom unteren Filtereinsatz 7 bei Rückspülvorgängen sind für den oberen Filtereinsatz 5 ein Rückspülarm 15 und für den unteren Filtereinsatz 7 ein Rückspülarm 17 vorgesehen, die jeder drei Rückspülorgane 21 aufweist. Beim gezeigten Ausführungsbeispiel sind die Rückspülarme 15 und 17 in axialem Abstand voneinander und um 180° radial zueinander versetzt an einer Antriebswelle 23 angeordnet, deren oberes Ende in einer Drehlagerung 25 am oberen Gehäusedeckel 27 des Gehäuses 1 sowie an einer unteren Drehlagerung 29 drehbar gelagert ist. An dieser ist das offene Ende der Antriebswelle 23, die durch ein Rohr gebildet ist, mit einem Schlammablassrohr 31 in Verbindung, an dem sich ein motorisch betätigbares Rückspülventil 33 befindet, das das Ablassrohr 31 beim Filterbetrieb der Vorrichtung sperrt und für einen Rückspülvorgang freigibt. Für den Drehantrieb ist die hohle Antriebswelle 23 an der oberen Drehlagerung 25 mit dem Getriebe 35 eines nicht gezeigten elektrischen Getriebemotors gekuppelt.

Im Filtrierbetrieb strömt das über den Fluideingang 13 zugeführte Unfiltrat durch den Eingangsfilter 11 und die Eingangsseite 9 in den Innenraum der Filtereinsätze 5 und 7, durchströmt beim Filtervorgang das Filtermaterial 19 zur Außenseite hin und tritt über den Filtratauslass 3 aus. Bei der Rückspülung, die bei geöffnetem Rückspülventil 33 erfolgt, bewegt die in Drehung versetzte Antriebswelle 23 die Rückspülarme15 und 17. Dabei werden die Rückspülorgane 21 mit an ihrer freien Stirnseite 37 befindlichen, spaltförmigen Durchtrittsöffnungen 39 abstandsfrei an der Innenseite des Filtermaterials 19 der Filtereinsätze 5, 7 vorbeigeführt. Die spaltförmigen Durchtrittsöffnungen 39 bilden an den Rückspülorganen 21 den Eingang ihres mit der rohrförmigen Antriebswelle 23 verbundenen, inneren Strömungsraums. Bei geöffnetem Rückspülventil 33 liegt an den schlitzdüsenartigen Durchtrittsöffnungen 39 die Druckdifferenz zwischen dem Systemdruck der die Filtereinsätze 5, 7 umgebenen Filtratseite und dem Druck in der Antriebswelle 23 an, der beispielsweise dem Umgebungsdruck entspricht. Bei dieser Druckdifferenz, die bei üblichem Systemdruck beispielsweise im Bereich von 1,5 bar liegt, lösen sich an den schlitzdüsenartigen Durchtrittsöffnungen 39 angelagerte Partikel ab, gelangen durch den inneren Strömungsraum der Rückspülorgane 21 in die Antriebswelle 23 und aus dieser über das Ablassrohr 31 nach außen. Anstelle des Umgebungsdrucks kann mittels eines Sauggebläses (nicht gezeigt) in der Antriebswelle 23 ein Unterdruck erzeugt sein.

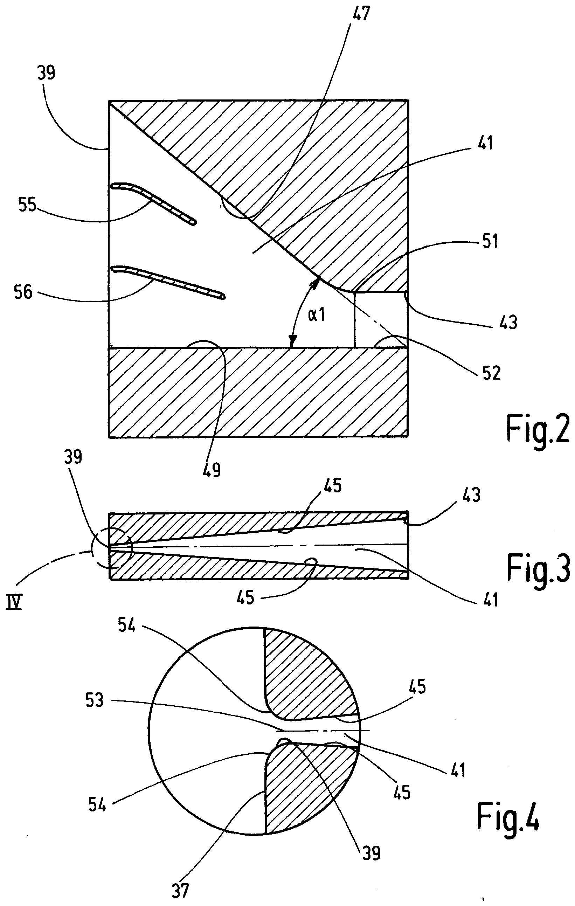

Die Fig. 2 und 3 zeigen die Geometrie des inneren Strömungsraums 41 der bei dem Ausführungsbeispiel von Fig. 1 vorgesehenen Rückspülorgane 21, von denen an den Spülarmen 15 und 17 jeweils drei Rückspülorgane 21 vertikal übereinanderliegend derart angebracht sind, dass ihre Durchtrittsöffnungen 39 sich aneinander anschließen und einen sich über die gesamte Höhe der Innenseite des Filtermaterials 19 erstreckenden Spalt bilden.

Die Fig. 2 bis 4 zeigen die Geometrie der Strömungsräume 41 der beim Beispiel von Fig. 1 eingesetzten Rückspülorgane 21. Wie aus der Fig. 3 ersichtlich ist, in der der Horizontalschnitt des Strömungsraums 41 in der zur Ebene der Durchtrittsöffnung 39 senkrecht verlaufenden Ebene dargestellt ist, erweitert sich der Strömungsraum 41 kontinuierlich von der Eintrittsöffnung 39 ausgehend in Richtung des mit der Antriebswelle 23 verbundenen Ausgangs 43, wobei die Seitenwände 45 des Strömungsraums 41 ebenflächig zueinander divergieren. Der Verlauf der oberen und der unteren Begrenzungswand ist der Fig. 2 entnehmbar. Wie gezeigt, hat die obere Begrenzungswand 47, vom oberen Ende der Durchtrittsöffnung 39 ausgehend, einen geradlinigen Schrägverlauf in Richtung auf die untere Begrenzungswand 49, die in der zur Richtung der Durchtrittsöffnung 39 senkrechten Horizontalebene einen ebenen Verlauf besitzt. Obere und untere Begrenzungswand 47 und 49 schließen den in Fig. 2 mit α1 bezeichneten Winkel miteinander ein, der beim vorliegenden Beispiel 38° beträgt. An einer in Fig. 2 mit 51 bezeichneten Übergangsstelle, die sich im Abstand vom Ausgang 43 befindet, geht die obere Begrenzungswand 47 vom Schrägverlauf zu einem zur unteren Begrenzungswand 49 parallelen Verlauf über, so dass zwischen Übergangsstelle 51 und Ausgang 43 ein Ausgangsrohr 52 gebildet ist. Beim gezeigten Beispiel entspricht der Abstand zwischen Übergangsstelle 51 und Ausgang 43 etwa dem Durchmesser des Ausgangsrohres 52. Letzteres besitzt beim gezeigten Beispiel einen Durchmesser von 21 mm bei einer Spalthöhe der Durchtrittsöffnung 39 von 80 bis 120 mm und einer Spaltweite von 0,5 bis 10 mm. Die Divergenz der Seitenwände 45 liegt vorteilhafterweise in einem Bereich von 4° bis 8°. Beim vorliegenden Beispiel ist hierfür ein Winkel von 5,3° vorgesehen. Wie die Fig. 4 zeigt, weisen die Begrenzungswände 45 an der Eintrittsstelle 53 der spaltförmigen Durchtrittsöffnung 39 eine Verrundung 54 auf. Wie die Fig. 2 zeigt sind im Strömungsraum 41, von der Durchtrittsöffnung 39 ausgehend, zwei tragflächenartige Strömungsleitkörper 55 und 56 vorgesehen, die sich zwischen den Seitenwänden 45 in Richtung auf den Ausgang 43 erstrecken. Dabei erstreckt sich der aus der Mitte der Durchtrittsöffnung 39 nach oben versetzte Strömungsleitkörper 55 über etwa ein Viertel der in Radialrichtung gemessenen Länge des Strömungsraums 41, während der untere Strömungsleitkörper 56, der etwas unterhalb der mittleren Höhe der Durchtrittsöffnung 39 beginnt, eine geringere Länge besitzt.

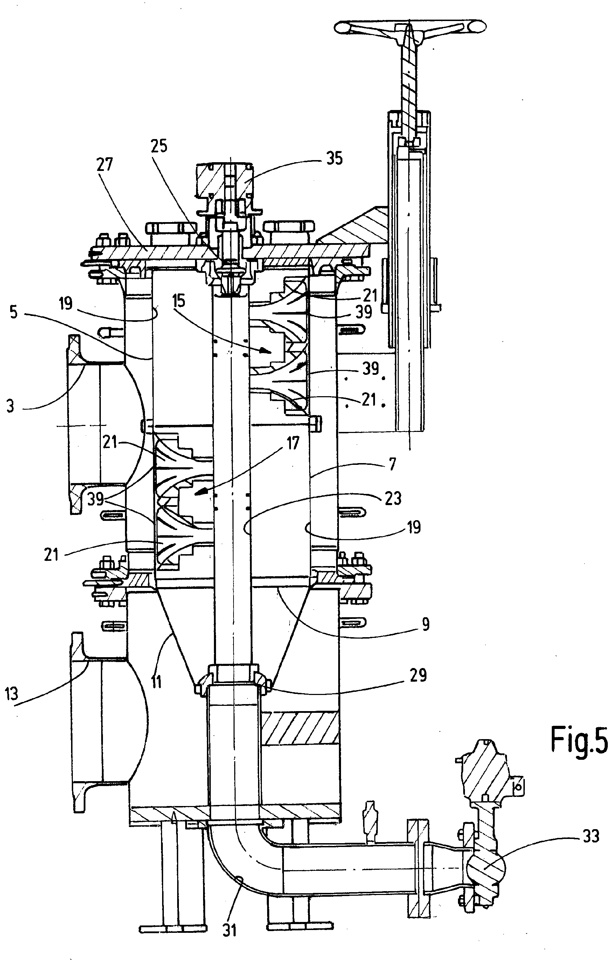

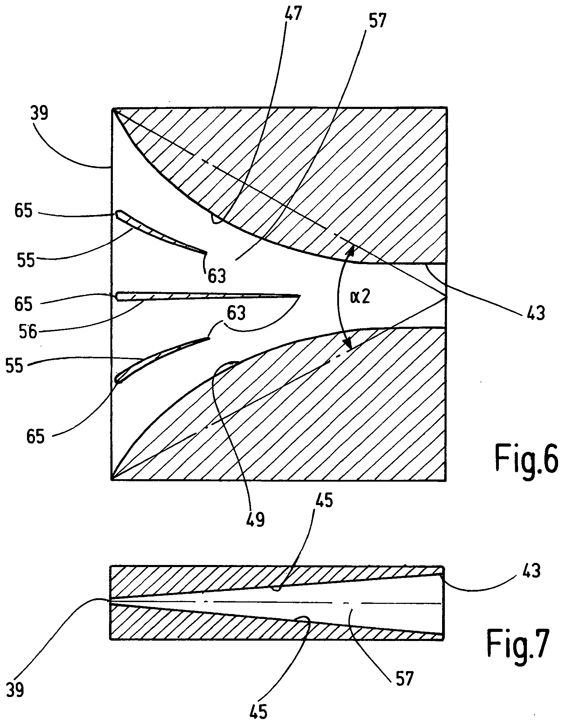

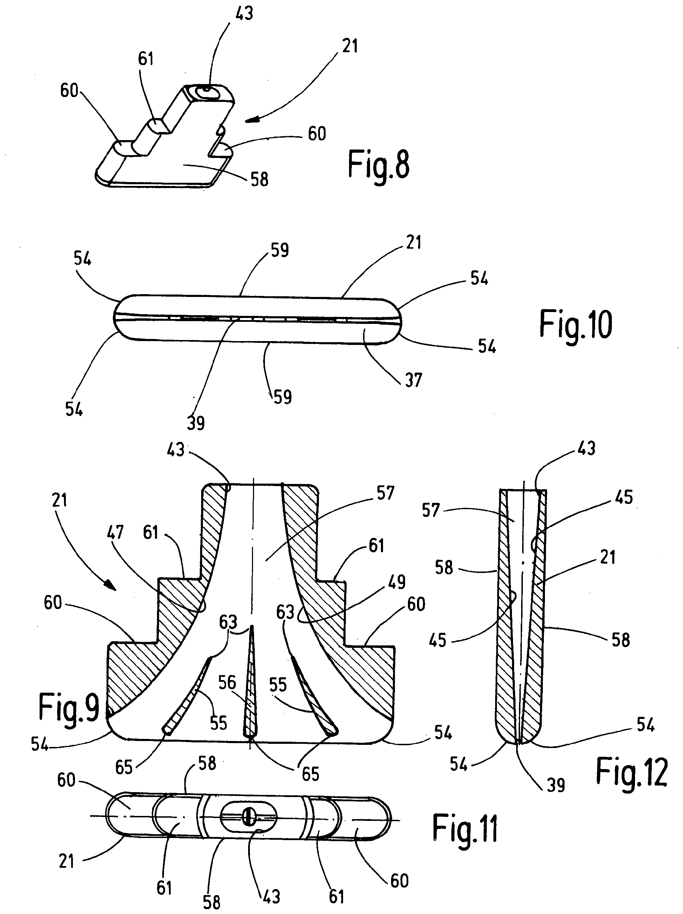

Die Fig. 5 zeigt ein zweites Ausführungsbeispiel der erfindungsgemäßen Filtervorrichtung. Dieses entspricht dem ersten Ausführungsbeispiel, abgesehen davon, dass an der Antriebswelle 23 für jeden Filtereinsatz 5 und 7 je zwei Rückspülorgane 21 übereinanderliegend angeordnet sind, deren innere Strömungsräume 57 eine gegenüber der Form der Strömungsräume 41 des ersten Beispiels abweichende Form besitzen. Die Rückspülorgane 21 des Beispiels von Fig. 5 und die Geometrie ihrer Strömungsräume 57 sind in den Fig. 8 bis 11 näher dargestellt. Wie die Fig. 8 und 9 zeigen, haben die Rückspülorgane 21 dieses Beispiels die Form eines Körpers mit zwei ebenen Seitenflächen 58, die sich von beiden, an die Langseiten 59 der freien Stirnseite 37 weg in zur spaltförmigen Durchtrittsöffnung 39 parallelen Ebenen zum Ausgang 43 erstrecken, wobei sich die Breite der Seitenflächen 58 in zwei Stufen 60 und 61 zum Ausgang 43 hin verringert. Während beim ersten Beispiel die obere Begrenzungswand 47 und die untere Begrenzungswand 49 des Einströmtrichters sich von der Durchtrittsöffnung ausgehend in geradem Verlauf zum Ausgang 43 erstrecken, haben beim zweiten Beispiel beide Begrenzungswände 47 und 49 einen gleichartigen parabelförmigen Verlauf, s. insbesondere Fig. 6. Wie dort angedeutet, ergibt sich bei diesem Verlauf eine Aufweitung des Einströmtrichters, die einem Öffnungswinkel a2 entspricht, der beim vorliegenden Beispiel 63° entspricht. Das Verhältnis der Spalthöhe zur Spaltbreite der Durchtrittsöffnung 39 beträgt bei diesem Ausführungsbeispiel 61. Wie beim ersten Beispiel divergieren die Seitenwände 45 von der Durchtrittsöffnung 39 zum Ausgang 43 hin mit einem Winkel, der beim gezeigten Beispiel 6° beträgt. Wie beim ersten Ausführungsbeispiel liegt das Flächenverhältnis von Spalteintritt der Durchtrittsöffnung 39 zu Kanalaustritt am Ausgang 43 im Bereich von 0,2 bis 2,0 und beträgt beim vorliegenden Beispiel 0,7. Ebenfalls in Entsprechung zum ersten Ausführungsbeispiel liegt das Verhältnis der Breite der spaltförmigen Durchlassöffnung 39 zum freien Durchmesser des rohr- oder kanalförmigen Abschnitts am Ausgang 43, also am Übergang zur internen Fluidführung der Antriebswelle 23, im Bereich zwischen 0,05 bis 0,5 und beträgt beim gezeigten Beispiel 0,1.

Ein weiterer Unterschied gegenüber dem ersten Ausführungsbeispiel besteht darin, dass im Strömungsraum 57 drei Strömungsleitkörper 55, 56 angeordnet sind. Von diesen weist der erste Strömungsleitkörper 56, der mittig auf der Symmetrieachse zwischen den Begrenzungswänden 47 und 49 gelegen ist, eine größere Länge auf als die zwei weiteren Strömungsleitkörper 55, die im Bereich zwischen dem mittleren Strömungsleitkörper 56 und der oberen Begrenzungswand 47 und im Bereich zwischen unterer Begrenzungswand 49 und dem mittleren Strömungsleitkörper 56 angeordnet sind. Die gleich geformten kürzeren Strömungsleitkörper 55 erstrecken sich mit der benachbarten Begrenzungswand 47, 49 zugewandter konkaver Wölbung in solcher Anordnung, dass sich für den Strömungsraum 57 eine symmetrische Querschnittsform ergibt, wobei sich die verjüngten inneren Enden 63 der Strömungsleitkörper 55 von der jeweils benachbarten Begrenzungswand 47 bzw. 49 in einem geringeren Abstand befinden als die gerundeten Nasen 65, die wiederum an der Durchtrittsöffnung 39 den gleichen Abstand von der gerundeten Nase 65 des mittleren Strömungsleitkörpers 56 besitzen, s. Fig. 6.

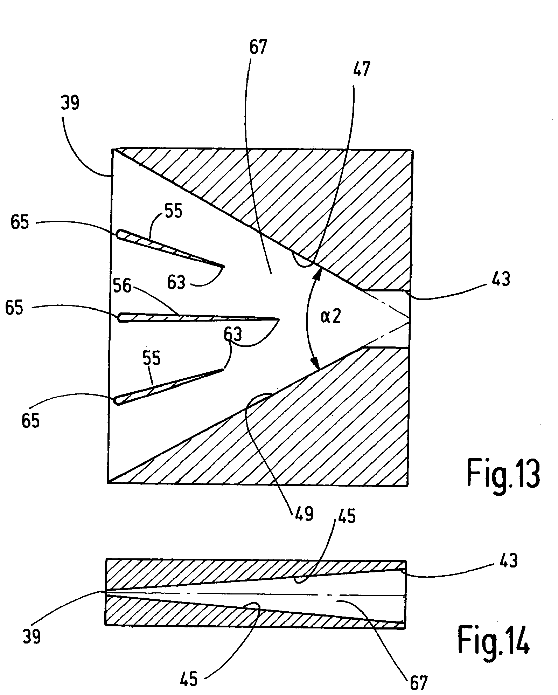

Die Fig. 13 und 14 zeigen für die beim Ausführungsbeispiel von Fig. 5 vorgesehenen Rückspülorgane 21 einen Strömungsraum 67 leicht abgewandelter Geometrie. Im Unterschied zum vorbeschriebenen Beispiel sind obere Begrenzungswand 47 und untere Begrenzungswand 49 nicht parabelförmig, sondern haben einen geradlinigen Verlauf. In symmetrisch hierzu angepasster Weise besitzen die kürzeren Strömungsleiter 55 keinen gewölbten Verlauf, sondern eine gerade Form, wobei die Lageanordnung die gleiche ist, wie beim vorbeschriebenen Beispiel. Auch die Winkel- und Flächenverhältnisse entsprechen denjenigen des vorstehend beschriebenen Beispiels.

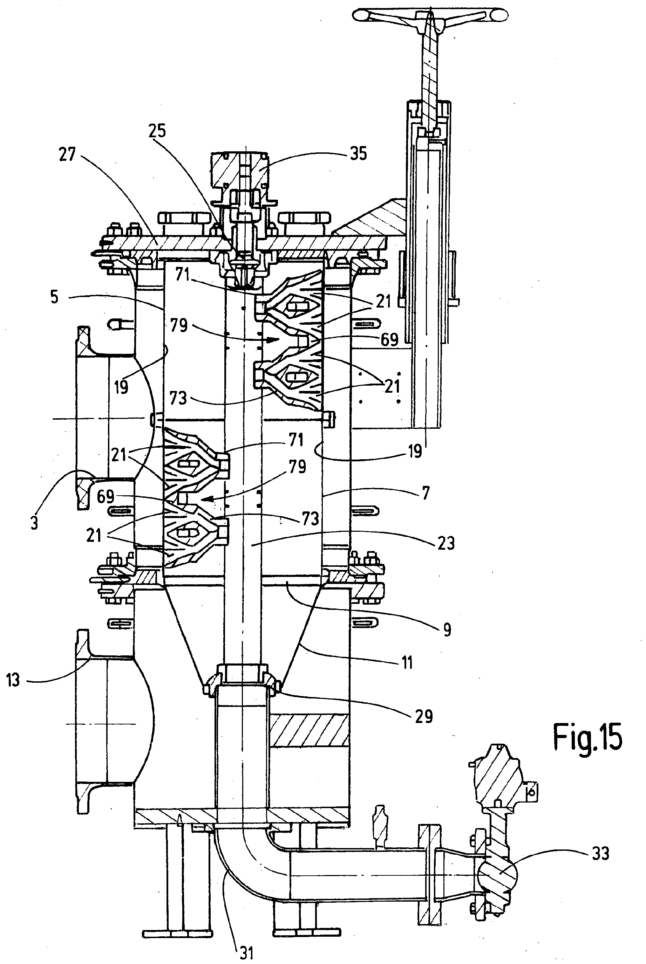

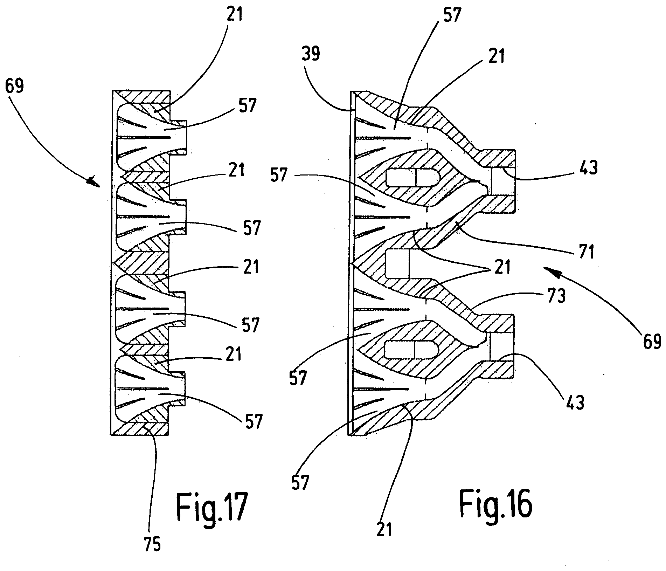

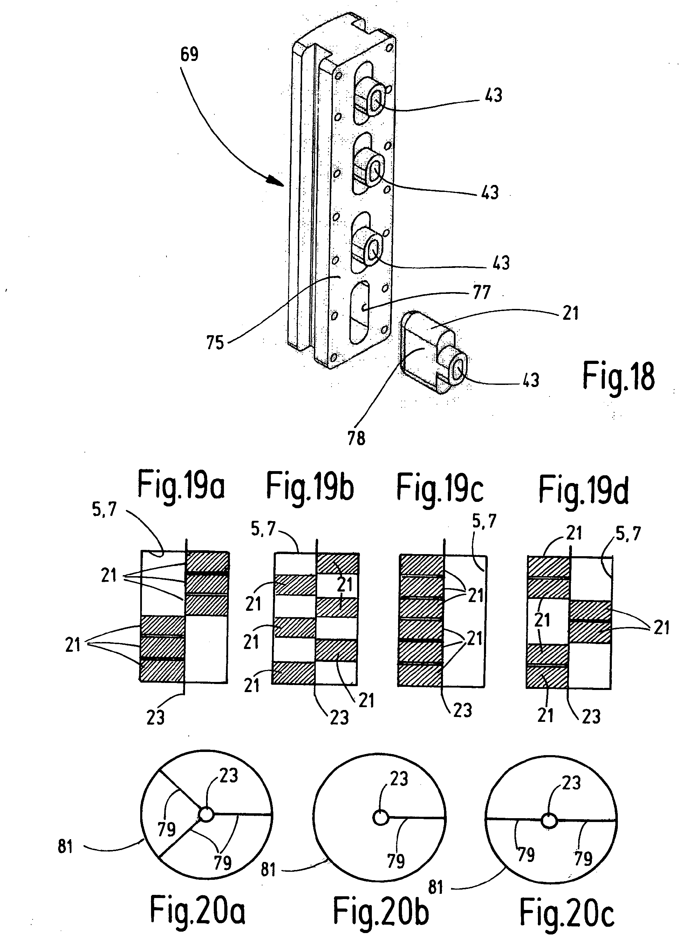

Die Fig. 15 zeigt ein weiteres Ausführungsbeispiel der erfindungsgemäßen Filtervorrichtung. Für jeden Filtereinsatz 5 und 7 sind vier Rückspülorgane 21 übereinanderliegend vorgesehen, die im Wesentlichen den Rückspülorganen 21 der Fig. 8 bis 11 entsprechen, also dem dort gezeigten Strömungsraum 57 mit parabelförmigen Begrenzungswänden 47, 49 und mit drei Strömungsleitkörpern 55, 56 entsprechen. Beim Beispiel von Fig. 15 sind diese Rückspülorgane 21 jedoch Bestandteil eines gemeinsamen Aufnahmegehäuses 69, das, wie Fig. 16 deutlicher zeigt, aus einer oberen Gehäusehälfte 71 und einer unteren Gehäusehälfte 73 besteht, die jede den Ausgang 43 für zwei Rückspülorgane 21 bilden. Die Fig. 17 und 18 zeigen eine Abwandlung dieses Ausführungsbeispiels, bei dem das Aufnahmegehäuse 69 die Form eines an der Außenseite der vorzugsweise durch ein Vierkantrohr gebildeten Antriebswelle 23 anbringbaren Leistenkörpers 75 besitzt, in dem Einschubkanäle 77 ausgebildet sind, in die Rückspülorgane 21 in Form von auswechselbaren Einsatzkörpern 78 einsetzbar sind, s. Fig. 18, in der ein Rückspülorgan 21 vor dem Einsetzen dargestellt ist. Als Einsatzkörper 78 entspricht die Außenform der Rückspülorgane 21, wie in Fig. 18 gezeigt, im Wesentlichen der Außenform des in Fig. 8 bis 11 gezeigten Rückspülorgans 21, abgesehen davon, dass die Schmalseiten lediglich einfach gestuft sind. Während beim Beispiel der Fig. 17 und 18 die Strömungsräume die Geometrie des Strömungsraums 57 (s. Fig. 3) besitzen, können als Einsatzkörper 78 in die Einschubkanäle 77 des Aufnahmegehäuses 49 Rückspülorgane 21 mit den anders geformten Strömungsräumen 41 oder 67 eingebaut sein.

Während in den Fig. 1, 5 und 15 für jeden Filtereinsatz 5 und 7 jeweils nur ein Rückspülarm 15 bzw. 17 an der Antriebswelle 23 vorgesehen ist, sind unterschiedliche Anordnungen möglich. Die Fig. 19a bis 19d zeigen Beispiele möglicher Gestaltungen. Wie in Fig. 19a, 19b und 19d dargestellt, sind für einen jeweiligen Filtereinsatz 5 oder 7 mehr als ein Rückspülarm vorgesehen, von denen beim Beispiel von Fig. 19a jeder drei Rückspülorgane 21 in aneinanderliegender Anordnung aufweist. In Fig. 19b sind ebenfalls zwei Rückspülarme für jeden Filtereinsatz 5, 7 gezeigt, wobei jeder Rückspülarm drei in jeweils gegenseitigem Abstand angeordnete Rückspülorgane 21 aufweist und wobei die Rückspülorgane 21 des einen Rückspülarms jeweils auf die Lücken zwischen den Rückspülorganen 21 des anderen Rückspülarms ausgerichtet sind. Wie Fig. 19c zeigt, ist für jeden Filtereinsatz 5, 7 lediglich ein Rückspülarm vorgesehen, bei dem sechs Rückspülorgane 21 in aneinanderliegender Anordnung vorgesehen sind. Die Fig. 19d wiederum zeigt für jeden Filtereinsatz 5, 7 zwei Rückspülarme, von denen der in der Figur rechtsseitig gelegene zwei Rückspülorgane 21 aufweist, die sich auf Höhe einer Lücke zwischen zwei oberen Rückspülorganen 21 und zwei unteren Rückspülorganen 21 des anderen Rückspülarms befinden. Die Fig. 20a bis 20c zeigen Beispiele möglicher Verteilungen von Rückspülarmen 79 über deren Drehkreis 81.

Die erfindungsgemäße Filtervorrichtung kann neben der Schmierölfiltration auch für sonstige Anwendungen für die sie geeignet ist eingesetzt werden. Neben dem bereits angesprochenen maritimen Verwendungszweck, bei dem Ballastwasser von Schiffen abgereinigt wird, kann die Vorrichtung auch zur Behandlung von Prozesswässern eingesetzt werden.

## Patentansprüche

1. Filtervorrichtung mit einem Filtergehäuse (1) mit einem Fluideinlass (13) für Unfiltrat und mit einem Fluidauslass (3) für Filtrat und mit mindestens einem im Filtergehäuse (1) aufgenommenen ein- oder mehrteiligen Filtereinsatz (5, 7), der mit mindestens einem Rückspülorgan (21) im Gegenstrom zur Filtrierrichtung abreinigbar ist, das mittels einer fluidführenden Antriebswelle (23) eines Drehantriebes (35) an der Innenseite des Filtermaterials (19) des jeweiligen Filtereinsatzes (5, 7) verfahrbar ist und an seinem dieser Innenseite des Filtermaterials (19) benachbarten Ende eine spaltförmige Durchtrittsöffnung (39) aufweist, die parallel zur Drehachse der Antriebswelle (23) verläuft und die in einen mit der Antriebswelle (23) fluidführend verbundenen Strömungsraum (41; 57; 67) einmündet, der sich in einer ersten Ebene, in der die Durchtrittsöffnung (39) liegt, in Richtung der Antriebswelle (23) zumindest teilweise kontinuierlich verjüngt, wobei in einer weiteren zweiten Ebene quer zu der ersten Ebene sich der Strömungsraum (41; 57; 67) ausgehend von der Durchtrittsöffnung (39) in Richtung der Antriebswelle (23) zumindest teilweise kontinuierlich erweitert, **dadurch gekennzeichnet, dass** innerhalb des Strömungsraumes (41; 57; 67) tragflächenartige Strömungsleitkörper (55, 56) eingebracht sind, die sich von der spaltförmigen Durchtrittsöffnung (39) weg zumindest teilweise in Richtung eines Kanalaustritts (43) erstrecken.

2. Filtervorrichtung nach Anspruch 1, **dadurch gekennzeichnet, dass** in der ersten Ebene sich der Strömungsraum (41; 57; 67) in der Art eines Einströmtrichters kontinuierlich verjüngt.

3. Filtervorrichtung nach Anspruch 1 oder 2, **dadurch gekennzeichnet, dass**, ausgehend von der spaltförmigen Durchlassöffnung (39), in der ersten Ebene mindestens
- eine Begrenzungswand (47) des Einströmtrichters schrägverlaufend und eine weitere Begrenzungswand (49) eben verlaufend;
- zwei Begrenzungswände (47, 49) schräg und geradlinig verlaufend;
- zwei Begrenzungswände (47; 49) mit parabelförmigem Verlauf; und
- eine Begrenzungswand schräg und geradlinig und die weitere Begrenzungswand kurvenförmig verlaufend
ausgebildet sind.

4. Filtervorrichtung nach einem der vorstehenden Ansprüche, **dadurch gekennzeichnet, dass** in Richtung der Fluidanbindung des Strömungsraumes (41; 57; 67) an eine interne Fluidführung der Antriebswelle (23) der jeweilige Strömungsraum (41; 57; 67) mit seinen Begrenzungswänden (45, 47, 49) in einen rohr- oder kanalförmigen Abschnitt (52) übergeht, in dem die Begrenzungswände (45, 47, 49) einen geradlinigen Verlauf haben.

5. Filtervorrichtung nach einem der vorstehenden Ansprüche, **dadurch gekennzeichnet, dass** in der zweiten Ebene der Strömungsraum (41; 57; 67) sich von der spaltförmigen Durchtrittsöffnung (39) in Richtung der internen Fluidführung der Antriebswelle (23) konisch mit geradlinig verlaufenden Begrenzungswänden (45) erweitert.

6. Filtervorrichtung nach einem der vorstehenden Ansprüche, **dadurch gekennzeichnet, dass** der Strömungsraum (41; 57; 67) an seinem Austritt aus dem Rückspülorgan (21) in Richtung des jeweiligen Filtereinsatzes (5, 7) zumindest eine Verrundung (54) an den Begrenzungswänden (45) der spaltförmigen Durchlassöffnung (39) aufweist, die parallel zur Drehachse der Antriebswelle (23) verläuft.

7. Filtervorrichtung nach einem der vorstehenden Ansprüche, **dadurch gekennzeichnet, dass** das Flächenverhältnis von Spalteintritt zu Kanalaustritt (43) im Bereich von 0,2 bis 2,0, vorzugsweise zwischen 0,3 bis 1,0, liegt.

8. Filtervorrichtung nach einem der vorstehenden Ansprüche, **dadurch gekennzeichnet, dass** die Ausdehnung der spaltförmigen Durchlassöffnung (39) von der Höhe zu ihrer Breite im Bereich von 10 bis 100, vorzugsweise im Bereich von 30 bis 70, liegt.

9. Filtervorrichtung nach einem der vorstehenden Ansprüche, **dadurch gekennzeichnet, dass** das Verhältnis der Breite der spaltförmigen Durchlassöffnung (39) zu dem freien Durchmesser des rohr- oder kanalförmigen Abschnitts (52) an der Stelle des Überganges zu der internen Fluidführung der Antriebswelle (23) zwischen 0,05 bis 0,5 liegt.

10. Filtervorrichtung nach einem der vorstehenden Ansprüche, **dadurch gekennzeichnet, dass** mindestens ein Teil der Strömungsleitkörper (55, 56) einen gebogenen oder geradlinigen Verlauf haben und sich durchgehend zwischen den Begrenzungswänden (45) des Rückspülorganes (21) erstrecken, die parallel zu der Drehachse der Antriebswelle (23) verlaufen.

11. Filtervorrichtung nach einem der vorstehenden Ansprüche, **dadurch gekennzeichnet, dass** mindestens ein Strömungsleitkörper (55) ausgehend von der spaltförmigen Durchlassöffnung (39) weiter in den Strömungsraum (41; 57; 67) hineinragt als mindestens ein weiterer Strömungsleitkörper (55), und dass der weiter hineinragende Strömungsleitkörper (56) vorzugsweise in der Mitte der Spaltöffnung der Durchlassöffnung (39) liegend sich von dieser in Richtung des Inneren des Strömungsraumes (41; 57; 67) weg erstreckt.

12. Filtervorrichtung nach einem der vorstehenden Ansprüche, **dadurch gekennzeichnet, dass** die Fluidführung innerhalb des Strömungsraumes (41; 57; 67) vom Spalteintritt bis vor dem Kanalaustritt (43) ohne Umlenkung des Gesamtstromes der Rückspülmenge erfolgt.

13. Filtervorrichtung nach einem der vorstehenden Ansprüche, **dadurch gekennzeichnet, dass** das jeweilige Rückspülorgan (21) mit seiner einen freien Stirnseite (37), die der Innenwand des Filtermaterials (19) des zuordenbaren Filtereinsatzes (5, 7) zugewandt ist, abstandsfrei an dieser Innenwand mittels der drehbaren Antriebswelle (23) vorbeigeführt ist.

14. Filtervorrichtung nach einem der vorstehenden Ansprüche, **dadurch gekennzeichnet, dass** eingesetzte Rückspülorgane (21) in einem zugeordneten Aufnahmegehäuse (69) austauschbar eingesetzt sind, das an der Antriebswelle (23) angeordnet ist.

15. Filtervorrichtung nach einem der vorstehenden Ansprüche, **dadurch gekennzeichnet, dass** entlang der Antriebswelle (23) mehrere Rückspülorgane (21) in Übereinanderanordnung eingesetzt sind, indem diese
- in mindestens zwei Gruppen zusammengefasst an verschiedenen Umfangspositionen an der Antriebswelle (23), vorzugsweise zu deren Drehachse diametral einander gegenüberliegend;
- in einer Gruppe ausschließlich auf einer Seite der Antriebswelle (23) liegend; oder
- in alternierender Reihenfolge auf gegenüberliegenden Seiten der Antriebswelle (23) angeordnet sind.

## Claims

1. Filter device comprising a filter housing (1) with a fluid inlet (13) for unfiltered medium and a fluid outlet (3) for filtrate and comprising at least one single or multipart filter insert (5, 7) mounted in the filter housing (1), said filter insert being able to be cleaned in the opposite direction to the filtration direction with at least one backwashing element (21) which can be displaced by means of a fluid-conveying drive shaft (23) of a rotary drive (35) on the inner face of the filter material (19) of the respective filter insert (5, 7) and which comprises a gap-shaped through-opening (39) on the end of said element that is adjacent to this inner face of the filter material (19), said through-opening running parallel to the axis of rotation of the drive shaft (23) and leading into a flow chamber (41; 57; 67) connected in a fluid-conveying manner to the drive shaft (23), said flow chamber at least partially continuously tapering in the direction of the drive shaft (23) in a first plane, in which the through-opening (39) is located, and said flow chamber (41; 57; 67) at least partially continuously widening in the direction of the drive shaft (23) in a further second plane transverse to the first plane from the through-opening (39), **characterised in that** flow guiding elements (55, 56) in the form of wings are inserted in the flow chamber (41; 57; 67), said flow guiding elements extending away from the gap-shaped through-opening (39) at least partially in the direction of a channel outlet (43).

2. Filter device according to claim 1, **characterised in that**, in the first plane, the flow chamber (41; 57; 67) tapers continuously in the manner of an intake funnel.

3. Filter device according to either claim 1 or claim 2, **characterised in that**, in the first plane, starting from the gap-shaped through-opening (39), at least
- one boundary wall (47) of the intake funnel is designed to run diagonally and a further boundary wall (49) is designed to run flat;
- two boundary walls (47, 49) run diagonally and in straight lines;
- two boundary walls (47; 49) follow a parabolic curve; and
- one boundary wall runs diagonally and in a straight line and the other boundary wall follows the shape of a curve.

4. Filter device according to any one of the preceding claims, **characterised in that**, in the direction of the fluid connection between the flow chamber (41; 57; 67) and an internal fluid passage of the drive shaft (23), the respective flow chamber (41; 57; 67) with its boundary walls (45, 47, 49) transitions into a cylindrical or channel-shaped section (52), in which the boundary walls (45, 47, 49) follow a straight line.

5. Filter device according to any one of the preceding claims, **characterised in that**, in the second plane, the flow chamber (41; 57; 67) widens conically in the direction of the internal fluid passage of the drive shaft (23) with boundary walls (45) running in straight lines from the gap-shaped through-opening (39).

6. Filter device according to any one of the preceding claims, **characterised in that**, at the outlet of the flow chamber from the backwashing element (21) in the direction of the respective filter insert (5, 7), the flow chamber (41; 57; 67) comprises at least one rounded area (54) on the boundary walls (45) of the gap-shaped through-opening (39) that runs parallel to the axis of rotation of the drive shaft (23).

7. Filter device according to any one of the preceding claims, **characterised in that** the surface ratio of the gap inlet to the channel outlet (43) is in the region of 0.2 to 2.0, preferably between 0.3 and 1.0.

8. Filter device according to any one of the preceding claims, **characterised in that** the extension of the gap-shaped through-opening (39) from height to width is in the region of 10 to 100, preferably in the region of 30 to 70.

9. Filter device according to any one of the preceding claims, **characterised in that** the ratio of the width of the gap-shaped through-opening (39) to the free diameter of the cylindrical or channel-shaped section (52) at the point of transition to the internal fluid passage in the drive shaft (23) is between 0.05 to 0.5.

10. Filter device according to any one of the preceding claims, **characterised in that** at least some parts of the flow guiding elements (55, 56) are curved or follow a straight line and extend continuously between the boundary walls (45) of the backwashing element (21), said walls extending in parallel with the axis of rotation of the drive shaft (23).

11. Filter device according to any one of the preceding claims, **characterised in that**, starting from the gap-shaped through-opening (39), at least one flow guiding element (55) protrudes further into the flow chamber (41; 57; 67) than at least one other flow guiding element (55), and **in that** the flow guiding element (56) that protrudes further, preferably lying in the middle of the gap opening of the through-opening (39), extends away from said opening in the direction of the inner face of the flow chamber (41; 57; 67).

12. Filter device according to any one of the preceding claims, **characterised in that** the fluid passage inside the flow chamber (41; 57; 67) goes from the gap inlet to in front of the channel outlet (43) without diverting the total flow of the backwash volume.

13. Filter device according to any one of the preceding claims, **characterised in that** the free end face (37) of the respective backwashing element (21), said face facing the inner wall of the filter material (19) of the filter insert (5, 7) to which it can be assigned, is passed directly, without a space, along this inner wall by means of the rotatable drive shaft (23).

14. Filter device according to any one of the preceding claims, **characterised in that** the backwashing elements (21) used are inserted interchangeably in an assigned mounting housing (69), which is arranged on the drive shaft (23).

15. Filter device according to any one of the preceding claims, **characterised in that** a plurality of backwashing elements (21) are placed on top of one another along the drive shaft (23), these being
- arranged in at least two groups at different circumferential positions on the drive shaft (23), preferably diametrically opposite one another in relation to the axis of rotation of said drive shaft;
- arranged in one group lying exclusively on one side of the drive shaft (23); or
- arranged in an alternating sequence on opposite sides of the drive shaft (23).

## Revendications

1. Dispositif de filtration, comprenant une enveloppe (1) de filtre ayant une entrée (13) de fluide pour du non filtrat et une sortie (3) de fluide pour du filtrat et ayant au moins un insert (5, 7) de filtre reçu dans l'enveloppe (1) de filtre en une ou en plusieurs parties, qui peut être nettoyé à contre courant de la direction de filtration par au moins un organe (21) de lavage en retour, lequel peut être déplacé au moyen d'un arbre (23) d'entraînement conduisant du fluide d'un entraînement (35) en rotation du côté intérieur de la matière (19) filtrante de l'insert (5, 7) de filtre respectif et a, à son bout voisin de ce côté intérieur de la matière (19) filtrante, une ouverture (39) de passage en forme de fente, qui s'étend parallèlement à l'axe de rotation de l'arbre (23) d'entraînement et qui débouche dans un espace (41 ; 57 ; 67) d'écoulement communiquant fluidiquement avec l'arbre (23) d'entraînement, espace qui, dans un premier plan, dans lequel se trouve l'ouverture (39) de passage, se rétrécit continuellement, au moins en partie, en direction de l'arbre (23) d'entraînement, dans lequel, dans un autre deuxième plan, transversalement au premier plan, l'espace (41 ; 57 ; 67) d'écoulement s'élargit continuellement, au moins en partie, dans la direction de l'arbre (23) d'entraînement, à partir de l'ouverture (39) de passage, **caractérisé en ce qu'**à l'intérieur de l'espace (41 ; 57 ; 67) d'écoulement, sont introduits des chicanes (55, 56) d'écoulement du type à surface porteuse, qui s'étendent, au moins en partie, en direction d'une sortie (43) de canal, en s'éloignant de l'ouverture (39) de passage en forme de fente.

2. Dispositif de filtration suivant la revendication 1, **caractérisé en ce que**, dans le premier plan, l'espace (41 ; 57 ; 67) d'écoulement se rétrécit continuellement à la manière d'un entonnoir d'entrée.

3. Dispositif de filtration suivant la revendication 1 ou 2, **caractérisé en ce que**, en partant de l'ouverture (39) de passage en forme de fente, sont constituées, dans le premier plan, au moins
- une paroi (47) de démarcation de l'entonnoir d'entrée s'étendant de manière inclinée et une autre paroi (49) de démarcation s'étendant de manière plane ;
- deux parois (47 ; 49) de démarcation s'étendant de manière inclinée et en ligne droite ;
- deux parois (47 ; 49) de démarcation à tracé en forme de parabole ; et
- une paroi de démarcation inclinée en ligne droite et l'autre paroi de démarcation s'étendant de manière incurvée.

4. Dispositif de filtration suivant l'une des revendications précédentes, **caractérisé en ce que**, dans la direction de l'entrée de fluide de l'espace (41 ; 57 ; 67) d'écoulement, sur une conduite interne de fluide de l'arbre (23) d'entraînement, l'espace (41 ; 57 ; 67) d'écoulement respectif se transforme, par ses parois (45, 47, 49) de démarcation, en un tronçon (52) tubulaire ou en forme de canal, dans lequel les parois (45, 47, 49) de démarcation ont un tracé en ligne droite.

5. Dispositif de filtration suivant l'une des revendications précédentes, **caractérisé en ce que**, dans le deuxième plan, l'espace (41 ; 57 ; 67) d'écoulement s'élargit coniquement par des parois (45) de démarcation s'étendant en ligne droite à partir de l'ouverture (39) de passage en forme de fente en direction de la conduite interne pour du fluide de l'arbre (23) d'entraînement.

6. Dispositif de filtration suivant l'une des revendications précédentes, **caractérisé en ce que** l'espace (41 ; 57 ; 67) d'écoulement a, sur sa sortie de l'organe (21) de lavage en retour, en direction de l'insert (5, 7) de filtre respectif, au moins un arrondi (54) sur les parois (45) de démarcation de l'ouverture (39) de passage en forme de fente, qui s'étend parallèlement à l'axe de rotation de l'arbre (23) d'entraînement.

7. Dispositif de filtration suivant l'une des revendications précédentes, **caractérisé en ce que** le rapport de surface de l'entrée en forme de fente à la sortie (43) de canal est compris dans la plage de 0,2 à 2,0, de préférence compris entre 0,3 et 1,0.

8. Dispositif de filtration suivant l'une des revendications précédentes, **caractérisé en ce que** l'étendue de l'ouverture (39) de passage en forme de fente, de la hauteur à sa largeur, est comprise dans la plage de 10 à 100, de préférence dans la plage de 30 à 70.

9. Dispositif de filtration suivant l'une des revendications précédentes, **caractérisé en ce que** le rapport de la largeur de l'ouverture (39) de passage en forme de fente au diamètre libre du tronçon (52) tubulaire ou en forme de canal est, à l'endroit de la transition à la conduite interne pour du fluide de l'arbre (23) d'entraînement, compris entre 0, 05 à 0,5.

10. Dispositif de filtration suivant l'une des revendications précédentes, **caractérisé en ce qu'**au moins une partie des chicanes (55, 56) ont un tracé incurvé ou en ligne droite et s'étendent de manière continue entre les parois (45) de démarcation de l'organe (21) de lavage en retour, qui s'étendent parallèlement à l'axe de rotation de l'arbre (23) d'entraînement.

11. Dispositif de filtration suivant l'une des revendications précédentes, **caractérisé en ce qu'**au moins une chicane (55) pénètre, à partir de l'ouverture (39) de passage en forme de fente, dans l'espace (41 ; 57 ; 67) d'écoulement davantage qu'au moins une autre chicane (55), et **en ce que** l'autre chicane (56), qui pénètre davantage, en se trouvant de préférence au milieu de l'ouverture en fente de l'ouverture (39) de passage, s'éloigne de celle-ci en direction de l'intérieur de l'espace (41 ; 57 ; 67) d'écoulement.

12. Dispositif de filtration suivant l'une des revendications précédentes, **caractérisé en ce que** la conduite de fluide à l'intérieur de l'espace (41 ; 57 ; 67) d'écoulement a lieu de l'entrée en fente jusqu'avant la sortie (43) de canal sans déviation de l'ensemble du courant de la quantité de lavage en retour.

13. Dispositif de filtration suivant l'une des revendications précédentes, **caractérisé en ce que** l'organe (21) respectif de lavage en retour passe devant, par son un côté (37) frontal libre, qui est tourné vers la paroi intérieure de la matière (19) filtrante de l'insert (5, 7) de filtre pouvant être associée, sans distance, cette paroi intérieure au moyen de l'arbre (23) d'entraînement tournant.

14. Dispositif de filtration suivant l'une des revendications précédentes, **caractérisé en ce que** l'organe (21) de lavage en retour inséré est inséré avec possibilité de remplacement dans un logement (69) de réception associé, qui est disposé sur l'arbre (23) d'entraînement.

15. Dispositif de filtration suivant l'une des revendications précédentes, **caractérisé en ce que** plusieurs organes (21) de lavage en retour sont insérés suivant un agencement superposé le long de l'arbre (23) d'entraînement, par le fait que cet agencement
- est rassemblé en au moins deux groupes, en des positions périphériques différentes sur l'arbre (23) d'entraînement, de préférence en étant opposés diamétralement par rapport à l'axe de rotation ;
- en un groupe se trouvant exclusivement d'un côté de l'arbre (23) d'entraînement ; ou
- en succession en alternance sur des côtés opposés de l'arbre (23) d'entraînement.
